Europäisches Patentamt

European Patent Office

Office européen des brevets

(11) Publication number: **0 409 552 A2**

# EUROPEAN PATENT APPLICATION

(21) Application number: **90307787.3**

(22) Date of filing: **17.07.90**

(51) Int. Cl.⁵: **B64C 11/30**

(30) Priority: **21.07.89 GB 8916714**

(43) Date of publication of application:
**23.01.91 Bulletin 91/04**

(84) Designated Contracting States:
**DE FR GB SE**

(71) Applicant: **DOWTY AEROSPACE GLOUCESTER Ltd.**
**Cheltenham Road**
**Gloucester, GL2 9QH(GB)**

(72) Inventor: **Ephgrave, Ian Charles**
**Flat 3, 26 Evesham Road**
**Cheltenham,Glos. GL52 2AB(GB)**

(74) Representative: **Chapple, Colin Richard et al**
**Dowty Group Services Ltd. Patents Dept.**
**Arle Court**
**Cheltenham, Glos. GL51 0TP(GB)**

(54) A propeller blade pitch control mechanism.

(57) A propeller blade pitch control mechanism which includes:
- an electronic pitch control mechanism;
and - a mechanical pitch control mechanism.

The electronic and mechanical pitch control mechanisms are arranged to work in conjunction with one another, for example, in parallel. During normal operation, the characteristics of the electronic pitch control mechanism prevail over the mechanical pitch control mechanism, while in the event of failure of the electronic pitch control mechanism the mechanical pitch control mechanism prevails.

EP 0 409 552 A2

## A PROPELLER BLADE PITCH CONTROL MECHANISM

This invention relates to a propeller blade pitch control mechanism, and in particular, a propeller blade pitch control mechanism incorporating a hybrid pitch controlling mechanism, that is a mechanism having an electronically controlled pitch controlling mechanism working in conjunction with a mechanically controlled pitch controlling mechanism.

Conventional propeller blade pitch control mechanisms are either hydro-mechanical in operation or electro-hydraulic in operation. Mechanically operating pitch control mechanisms have been used in the industry for several years. The technology associated with these types of mechanism, and the drawbacks concerning the accuracy of the mechanism, have been well appreciated by those skilled in the art.

Now electronically operating pitch control mechanisms are a relatively new development in this industry. Although these systems have an inherently high degree of accuracy in operation, there are drawbacks in the usage of such systems.

The present invention is concerned with providing a pitch control mechanism which combines the advantages of the accuracy of the electronically operated pitch control mechanisms with the reliability of the mechanically operated pitch control mechanisms.

In accordance with the present invention a propeller blade pitch control mechanism includes:
- an electronic pitch control mechanism including an electronic control unit;
and - a mechanical pitch control mechanism;
wherein the electronic pitch control mechanism and the mechanical pitch control mechanism work in conjunction with one another, with during normal operation of the mechanism the operational characteristics of the electronic pitch control mechanism prevailing and in the event of failure of the electronic pitch control mechanism the mechanism still being operational by means of the mechanical pitch control mechanism.

A propeller pitch blade pitch control mechanism made in accordance with the present invention, has the following advantages over previously proposed hydro-mechanical mechanisms:

1. Synchrophasing of all the propellers is relatively easily achieved, meaning that when the propellers have been synchrophased the following is observed:
- considerably lower noise emission levels from the propellers
and - smoother more comfortable ride for the airplane passengers.
and

2. As a result of the reduction in operating components, the opportunity of mechanical and/or electronic equipment failure is significantly reduced i.e. the reliability of the system is enhanced.

Although this mechanism is in effect a hybrid system using the operation of two independent systems to produce the required effect. It cuts the middle ground between the purely mechanical and electrical systems, in that:
- in view of the reliability of operation achieved with the mechanical pitch controlling mechanism, the complexity of the electronics associated with the valve can be reduced, hence reducing cost thereof; and - the accuracy of the hybrid system is taken from the more accurate mechanism i.e. the electronic pitch control mechanism.

It is well known in the industry, the replacement of a purely mechanical pitch control mechanism with a purely electronic pitch control mechanism or vice versa involves the replacement of the mechanism as a whole. Now with the present invention, the hybrid form of the pitch control mechanism, can be fitted to a conventional aircraft by adaption of the present pitch control mechanism, either mechanical or electrical. This makes the pitch control mechanism of the present invention ideal for updating and improving the systems etc., on presently operational aircraft having a hydro-mechanical system.

Preferably, the electronic and mechanical pitch control mechanisms of the aircraft are arranged in parallel to each other.

Preferably, the pitch control mechanism further includes a propeller blade feathering mechanism, and most preferably, a mechanical feathering mechanism.

Preferably, the pitch control mechanism further includes an overspeed fail-safe mechanism, and most preferably, a mechanical overspeed governing mechanism.

Preferably, the pitch control mechanism comprises a pitch control unit which includes:
- a constant speed servo valve which is electronically controlled;
- an electronic control unit;
- a beta valve arrangement;
and - a constant speed unit which is mechanically controlled;
wherein the mechanism is hydraulically operated.

Preferably, the pitch control unit further includes a feathering means which includes:
- a feathering valve;
and - a feathering flow control valve.

Preferably, the electronic control unit is a microprocessor which receives signals relating to the speed of the propeller and/or the pitch of the propeller blade and controls the constant speed servo valve accordingly.

The signals relating to the speed of the propeller and/or the pitch of the propeller blades may be supplied by electronic sensing means. In this case the signals may originate from a transducer which could be mounted remotely from, or in close proximity (possibly on) the constant speed unit.

The beta valve arrangement included in the pitch control unit may be any one of those incorporated in conventional propeller blade systems or assemblies. The actual design and configuration of the beta valve arrangement will be well appreciated by those skilled in the art and consequently no further information is needed or will be given.

In a preferred embodiment of the present invention the mechanism includes:
- a pitch control unit;
- a feathering unit;
and - an overspeed governor unit.

The invention also includes a propeller blade system incorporating a propeller blade pitch control mechanism made in accordance with the present invention.

The invention further includes an aircraft incorporating a propeller blade system and/or a propeller blade pitch control mechanism made in accordance with the present invention.

The invention will now be illustrated by way of description of an example of the invention with reference to the accompanying drawings, in which:

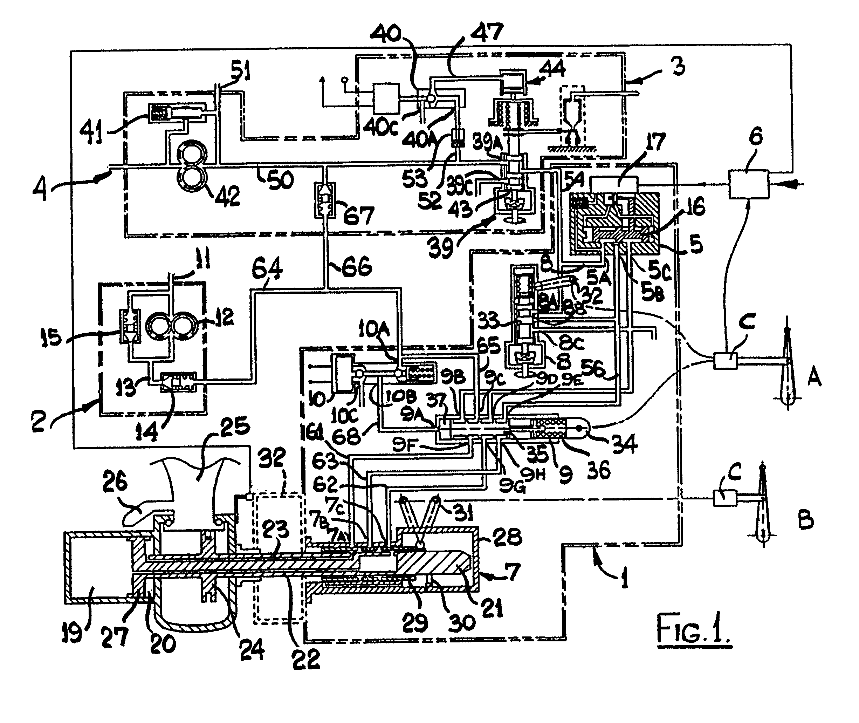

Figure 1 shows a schematic representation of a propeller blade pitch control mechanism made in accordance with the present invention.

Now referring to Figure 1, a propeller blade pitch control mechanism made in accordance with the present invention includes:
- a pitch control unit 1 including a feathering means having a feathering pump mechanism 2;
and - an overspeed governor unit 3.

The propeller blade pitch control mechanism is provided in association with an engine of an aircraft, and for each engine of the aircraft the pilot is provided with two manual control means an engine condition lever A and an engine power lever B, to control the operation of the aircraft. The engine condition lever A controls the speed of the propeller and the power lever B controls the pitch of the propeller blades.

Each of the levers is provided with a cam box C to relay the setting of the lever to the relevant part of the pitch control mechanism.

The propeller blade pitch control mechanism is operated by means of hydraulic oil which is supplied to the mechanism along the supply line 4.

The pitch control unit 1 comprises:

- a constant speed servo valve 5;
- a microprocessor 6;
- a beta valve arrangement 7;
- a constant speed unit 8;
and - a feathering means which includes a feathering valve 9, and a feathering flow control valve 10 which has its input side connected to the feathering pump means 2.

The feathering pump means 2 includes:
- an input line 11 connected to a positive head reservoir tank (not shown);
- a gear pump 12 in the input line 11;
- an output line 13 having a non return valve 14 allowing only flow of hydraulic fluid from the pump means 2;
and - a pressure relief valve 15 in parallel with the gear pump allowing hydraulic flow to the positive head reservoir tank in the case of pressure build up between the gear pump 12 and the non return valve 14.

The constant speed servo valve 5 is a two stage electro-hydraulic servo valve having a spool 16, three input ports 5A, 5B and 5C, and an electronic control means 17 connected to the microprocessor 6.

The microprocessor 6 in addition to being electrically connected to the constant speed servo valve 5, the microprocessor 6 is also connected to the constant speed unit 8, and thereby the feathering valve 9 to enable the feedback of signals relating to the speed of the propeller and the pilot's propeller condition lever A.

Additionally, the microprocessor 6 can be connected to the microprocessors of the propeller blade pitch control mechanisms of other engines of the aircraft.

The beta valve arrangement 7 is a standard form of arrangement used with conventional aircraft, operating by means of hydraulic oil and having a coarse propeller blade pitch oil driving side 19 and a fine propeller blade pitch oil driving side 20.

The beta valve arrangement 7 includes a casing 28 with mounted therein:
- an inner tube 21 with a first oil passageway 22 connected to the coarse oil driving side 19, a second oil passageway 23 connected to the fine oil driving side 20, pitch transmission means 24 connected to the propeller blades 25 each of which may have a counterweight 26, and a piston head 27 which separates the coarse oil driving side 19 and the fine oil driving side 20;
- an outer tube 29 which circumferentially surrounds a section of the inner tube 21;
- a low pitch indication switch 30;
and - a transmission means 31 which transmits the position of the power lever B to the outer tube 29.

Further, a gearbox 32 mounted so that it circumferentially surrounds the inner tube 21 and transmits the drive from the aircraft engine.

The beta valve arrangement 7 has three oil ports 7A, 7B and 7C connectable to the coarse oil driving side 19 and the fine oil driving side 20 dependent upon the position of the outer tube 29 relative to the inner tube 21 and thereby to which oil passageway 22, 23.

The constant speed unit 8 is a mechanical governor valve having three ports 8A, 8B and 8C, a spool 33, and a transmission means 32 which relays the position of the engine condition lever A to the unit 8.

The feathering valve 9 is mechanically connected to the engine condition lever A by a transmission lever arrangement 34 and has five inlet ports 9A, 9B, 9C, 9D and 9E and three outlet ports 9F, 9G and 9H in addition to a spool 35. The inlet port 9A is connected to a chamber 37 at one end of the spool 35, with the actual connection of the other four inlet ports to the outlet ports being dictated by the spool 35 of the valve 9.

Further the valve 9 is provided with a torsion spring 36, against which the pressure of oil in the chamber 37 moves the spool 35.

The feathering flow control valve 10 is a simple on/off solenoid activated valve having a single inlet 10A connected to a main outlet 10B, with the value also having a secondary outlet 10C connected to drain. In the normal operation of the mechanism the inlet of this valve 10 is not in communication with the outlets.

The overspeed governor unit 3 includes:
- an overspeed governor arrangement having a mechanical overspeed governor valve 39 and a solenoid switch valve arrangement 40;
- a pressure relief valve 41;
and - a gear pump 42.

The mechanical overspeed governor valve 39 includes one input port 39A and two output ports 39B and 39C, one of which (port 39C) is connected to drain, a spool 43 and a hydraulic pressure chamber arrangement 44 mounted at one end of the spool 43.

By means of a mechanical linkage an engine pressure control means 46 is interlinked with the spool 43 of the mechanical overspeed valve 39.

The solenoid switch valve 40 has an input port 40A and two output ports 40B and 40C, one of which 40C is connected to drain. The other outlet port 40B of the valve 40 is connected to a line 47 which leads to the hydraulic pressure chamber arrangement 44.

The solenoid of the switch valve 40 in normal operating condition connects the line 47 to input port 46A, and when the solenoid is energised connects the line 47 to drain 40C.

The gear pump 42 and pressure relief valve 41 are arranged in the hydraulic fluid inlet 4 to the mechanism in a parallel arrangement so that pressure build-up in the system is prevented, i.e. vents from the system.

The outlet side of the gear pump 42, and therefore inlet to the pressure relief valve 41, are connected to the inlet port 39A of the mechanical overspeed governor valve 39 by a line 50. The line 50 is provided with a thermal bleed line 51 and a branch line 52.

The branch line 52 is provided with a filter 53 and is connected to the inlet port 40A of the solenoid switch valve arrangement 40.

The outlet port 39B of the mechanical overspeed governor valve 39 is connected to the port 8A of the constant speed unit 8 by a line 54, and to the port 5A of the constant speed servo valve by a branch line 55 from the line 54.

The port 8B of the constant speed unit 8 is connected to the inlet port 9E of the feathering valve 9 by a line 56 and the port 5B of the constant speed servo valve 5 by a branch line 57 from the line 56.

The port 8C of the constant speed unit 8 is connected by a line 58 to the inlet ports 9B and 9D of the feathering valve 9, and by a branch line 59 from the line 58 to the port 5C of the constant speed servo valve 5. A drain line 60 is also provided in the line 58.

The outlet port 9F of the feathering valve 9 is connected by a line 61 to the port 7A of the beta valve arrangement 7 and via the second oil passageway 23 to the fine pitch oil driving side of the beta valve arrangement when the outer tube 29 thereof so allows.

The outlet port 9G of the feathering valve 9 is connected by a line 62 to the port 7C of the beta valve arrangement 7, and via the first oil passageway 22 the coarse pitch oil driving side of the arrangement 7 when the outer tube 29 thereof allows.

The outlet port 9H of the feathering valve 9 is connected by a line 63 to the port 7B of the beta valve arrangement 7.

A line 64 connects the output from the non return valve 14 of the feathering pump means 3 to the input side of the feathering flow control valve 10. A branch line 65 from this line 64 is connected to the inlet port 9C of the feathering valve 9.

A second branch line 66 interconnects the line 64 and the line 50. A non return valve 67 is provided in this branch line 66 which prevents hydraulic oil flowing from the line 64 to the line 50.

A line 68 interconnects the main output from the feathering flow control valve 10 and the port 9A of the feathering valve 9.

## Claims

1. A propeller blade pitch control mechanism includes:
- an electronic pitch control mechanism including an electronic control unit;
and - a mechanical pitch control mechanism;
wherein the electronic pitch control mechanism and the mechanical pitch control mechanism work in conjunction with one another, and during normal operation of the mechanism the operational characteristics of the electronic pitch control mechanism prevailing whilst in the event of failure of the electronic pitch control mechanism the mechanism is still operational by means of the mechanical pitch control mechanism.

2. A propeller blade pitch control mechanism in accordance with claim 1, in which the electronic and mechanical pitch control mechanisms of the aircraft are arranged in parallel to each other.

3. A propeller blade pitch control mechanism in accordance with claim 1 or 2, in which the pitch control mechanism further includes a propeller blade feathering mechanism.

4. A propeller blade pitch control mechanism in accordance with any one of the preceding claims, in which the pitch control mechanism further includes an overspeed fail-safe mechanism.

5. A propeller blade pitch control mechanism in accordance with any one of the preceding claims, in which the pitch control mechanism comprises a pitch control unit which includes:
- a constant speed servo valve which is electronically controlled;
- an electronic control unit;
- a beta valve arrangement;
and - a constant speed unit which is mechanically controlled;
wherein the mechanism is hydraulically operated.

6. A propeller blade pitch control mechanism in accordance with claim 5, in which the pitch control unit further includes a feathering means which includes:
- a feathering valve;
and - a feathering flow control valve.

7. A propeller blade pitch control mechanism in accordance with claim 5 or 6, in which the electronic control unit is a microprocessor which receives signals relating to the speed of the propeller and/or the pitch of the propeller blade and controls the constant speed servo valve accordingly.

8. A propeller blade pitch control mechanism in accordance with any one of the preceding claims, wherein the mechanism includes:
- a pitch control unit;
- a feathering unit;
and- an overspeed governor unit.

9. A propeller blade system incorporating a propeller blade pitch control mechanism as claimed in any one of the preceding claims.

10. An aircraft incorporating a propeller blade system and/or a propeller blade pitch control mechanism made in accordance with the present invention.

Fig.1.